(19) Europäisches Patentamt
European Patent Office
Office européen des brevets

(11) **EP 4 764 403 A1**

(12) **EUROPEAN PATENT APPLICATION**

(43) Date of publication:
**24.06.2026 Bulletin 2026/26**

(21) Application number: **24222084.6**

(22) Date of filing: **20.12.2024**

(51) International Patent Classification (IPC):
**G01C 15/00** (2006.01) **G01C 1/02** (2006.01)
**G01C 25/00** (2006.01)

(52) Cooperative Patent Classification (CPC):
**G01C 1/02; G01C 15/002; G01C 25/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Trimble Inc
Westminster CO 80021 (US)**

(72) Inventor: **CLAESON, Jonas
Westminster, 80021 (US)**

(74) Representative: **AWA Sweden AB
Matrosgatan 1
Box 5117
200 71 Malmö (SE)**

(54) **CALIBRATION OF A TOTAL STATION**

(57) The present inventive concept relates to a system (1) comprising: a total station (10) comprising a center unit (100) mounted on an alidade (110) for rotation about a first axis (A1), wherein the alidade (110) is mounted on a base (120) of the total station (10) for rotation about a second axis (A2) orthogonal to the first axis (A1), whereby a sighting axis (A3) of the total station (10) is rotatable about a rotation point; and an optical calibration element (12) connectable to the total station (10) or a support (130) on which the total station (10) is installed; and wherein the optical calibration element (12) in a connected state is arranged such that, when the sighting axis (A3) is rotated about the rotation point to form a non-zero calibration angle (B) relative to a plane having a normal parallel to the second axis (A2), the center unit (100) is aimed toward a target (14) via the optical calibration element (12).

FIG. 1

**Description**

Technical field

The present inventive concept relates to calibration of a total station.

Background of the invention

Land surveying is a technique of measuring and mapping physical features of the environment (e.g., land or terrain). This technique is typically used within land development, construction planning, and infrastructure projects, to name a few. Land surveying typically involves using special equipment such as total stations to determine detailed information of the environment, e.g., positions of geographical points, as well as distances and angles between these points.

A total station is a device that typically integrates an electronic distance measurement unit (EDM unit) with a movable center unit (or telescope) for rotation about at least two axes (typically a trunnion, or horizontal, axis and an azimuth, or vertical, axis). The center unit is typically mounted on an alidade for rotation about a first axis (e.g., the trunnion axis) and the alidade is, in turn, typically mounted on a base for rotation about a second axis (e.g., the azimuth axis) intersecting (e.g., being preferably orthogonal to) the first axis, such that a sighting axis of the total station is rotatable about a rotation point (typically corresponding to the intersection between the first axis and the second axis). Further, a total station typically integrates an angular measurement device configured to measure a rotation angle VA about the trunnion axis of the sighting axis in relation to the alidade, and an angular measurement device configured to measure a rotation angle HA about the azimuth axis of the alidade in relation to the base. During use, the total station is typically set up such that the first axis is oriented in the horizontal plane and the second axis is oriented in the vertical direction. Thus, the sighting axis of the total station is defined as an axis of the center unit that is (preferably) orthogonal to the first axis, i.e., the axis about which the center unit is rotatable relative to the alidade. The sighting axis is also the axis along which a measurement is intended to be performed using the center unit by means of one or more of a plurality of measurement devices of the center unit (e.g., using the EDM unit).

However, since the sighting axis of a total station is defined by the rotation around the first axis and the rotation about the second axis, issues may arise in case the first axis and second axis are not orthogonal. This may be due to mechanical imperfections, and could also change over time due to influence from the environment, such as temperature variations, mechanical impacts, etc. There is therefore a need of calibrating the total station, not only after being manufactured (e.g., in a factory) but also on-site, in order to determine, and possibly compensate for, any alignment errors, e.g., between the trunnion axis and the vertical axis of the total station.

A technique for calibrating total stations involves repeating measurements towards a target using different faces, e.g., Face 1 and Face 2 (or Face Left and Face Right). A total station (or theodolite) can be used for accurate aiming, which means aligning the sighting axis to a target center, and angular measurements can be done in two independent ways, typically referred to as Face 1 and Face 2. In Face 1, the total station (or theodolite) is aimed at a target, and the angular measurements in Face 1 provide angular values VA1 and HA1 associated with angle measurements of rotations around the first axis and the second axis, respectively. In Face 2, the center unit of the total station is rotated about the second axis by approximately 180° and about the first axis to aim at the same target as in Face 1. The angular measurements in Face 2 measurement provide angular values VA2 and HA2 of rotations around the first axis and the second axis, respectively. In case the first axis with respect to the second axis, and the sighting axis with respect to the first axis of the total station are perpendicular, the following relations are valid:

$$HA2 = \begin{cases} HA1 + 180°, & \text{if } HA1 < 180° \\ HA1 - 180°, & \text{if } HA1 > 180° \end{cases}$$

$$VA2 = 360° - VA1$$

These above relations are commonly used in the technical field and assume that the vertical angle is zero for a sighting axis pointing to zenith. Any differences dHa and dVA given by:

$$dHA = \begin{cases} \dfrac{(HA2 - HA1 - 180°)}{2}, & \text{if } HA2 > HA1 \\ \dfrac{(HA1 - HA2 - 180°)}{2}, & \text{if } HA2 < HA1 \end{cases}$$

$$dVA = \begin{cases} \dfrac{(VA1 + VA2)}{2} - 180°, & \text{if } VA2 > VA1 \\[2ex] \dfrac{(VA1 + VA2)}{2}, & \text{if } VA2 < VA1 \end{cases}$$

between the angular measurements of Face 1 and Face 2, will be indicative of alignment errors of the total station. Assuming that the sighting axis is perpendicular to the first axis (i.e., the trunnion axis), and that the first axis deviates from being orthogonal to the second axis by a deviation angle (typically referred to as a trunnion axis tilt or trunnion axis error) given by dHA×tan VA1. For VA1 = 90° (i.e., the sighting axis being parallel to a horizontal plane), tan(VA1) becomes infinite, whereby angular measurements at vertical angles different from 90° (or 270°) are needed in order to determine the deviation angle of the first axis. Also, horizontal angle deviations increase for angles different from 90° (or 270°), which allow for a better accuracy of the determination of the deviation angle. However, finding suitable targets which can be used for the Face 1 and Face 2 measurements that also fulfil the requirements discussed above are often challenging. Thus, there exists a need for improvement within the art.

Summary of the invention

In view of the above, it is an object of the present inventive concept to provide a system capable of determining on-site (e.g., in a terrain to be surveyed) a deviation between a first axis (i.e., a trunnion axis) of a total station relative to a plane having a normal parallel to a second axis (i.e., an azimuth axis) of the total station without needing to aim a center unit of the total station toward a target which is significantly above or below (typically at least 10 degrees) a horizon at a sufficiently far distance (typically at least 30 m).

A further objective is to, at least partly, mitigate, alleviate or eliminate one or more of the above-identified deficiencies in the art and disadvantages singly or in any combination and solve at least the above-mentioned problem.

According to a first aspect, a system comprising a total station and an optical calibration element is provided. The total station comprises a center unit mounted on an alidade for rotation about a first axis, wherein the alidade is mounted on a base of the total station for rotation about a second axis orthogonal to the first axis, whereby a sighting axis of the total station is rotatable about a rotation point. The optical calibration element is connectable to the total station or a support on which the total station is installed. The optical calibration element in a connected state is arranged such that, when the sighting axis is rotated about the rotation point to form a non-zero calibration angle relative to a plane having a normal parallel to the second axis, the center unit is aimed toward a target via the optical calibration element.

Ideally, the first axis (i.e., a trunnion axis) and the second axis (i.e., an azimuth, or vertical, axis) of the total station should be orthogonal, and checking (or calibrating) for alignment errors between the first and second axes is typically referred to as a trunnion axis tilt calibration. As discussed in the background section, for prior art systems, performing a trunnion axis tilt calibration for a total station, it is typically required to perform Face 1 and Face 2 angular measurements using a target at a sufficiently far distance and at a sufficiently large vertical angle relative to a horizontal plane. As an example, for such checks/calibrations, the center unit of the total station is typically rotated toward a target such that the sighting axis of the total station forms an angle of at least 10 degrees relative to the horizontal plane. In other words, for prior art systems, the target must be at a sufficiently great height (or at a sufficiently low height) compared to the total station for the sighting axis to form such great angle relative to the horizontal plane when the center unit is aimed toward the target. Further, for achieving accurate Face 1 and Face 2 measurements, a distance to the target should preferably be at a sufficiently long distance, e.g., at least 30 m. The combination of a great angle and large distance typically requires target at great heights, often at least 5 m. Targets fulfilling these requirements can often be challenging to locate in certain environments (e.g., open fields).

By the present inventive concept, the sighting axis of the total station can form a sufficiently wide angle relative to the plane having a normal parallel to the second axis (this plane is typically the horizontal plane when the total station is in use) without requiring the center unit to be aimed toward a target at a great height. Instead, the center unit is aimed toward a target via the optical calibration element. In a first version, the optical calibration element comprises a mirror which can be arranged such that the sighting axis forms a great angle (e.g., 10 degrees or larger) to the plane having a normal parallel to the second axis while the center unit is aimed toward an external target (i.e., external to the system) at a sufficiently large distance (e.g., 30 m or larger) which has a lower height (e.g., lower than 5 m). In a second version, the optical calibration element comprises a collimator providing a virtual target. Hence, the collimator can be arranged such that the center unit is aimed toward the virtual target when the sighting axis is rotated to form a great angle (e.g., 10 degrees or larger) to the plane having a normal parallel to the second axis. Both in the first version and in the second version, the optical calibration element allows on-site trunnion axis tilt calibration of the total station without requiring a target at a great height (e.g., 5 m or higher).

The optical calibration element may be releasably connectable to the total station or to the support on which the total station is installed. Accordingly, the optical calibration element may be coupled to the total station when needed. For instance, the optical calibration element and the total station may be transported to a site to be surveyed as separate parts, whereby the optical calibration element may be connected to form a connected state in connection with the trunnion axis tilt calibration. Further, the optical calibration element may be removed from the total station after finishing the trunnion axis tilt calibration. Further, the optical calibration element may be retrofitted to existing total stations.

The non-zero calibration angle may be 10 degrees or wider. Accordingly, the non-zero calibration angle may be sufficiently wide for a potential alignment error between the first and second axes (e.g., that the first and second axes are not orthogonal) to be identified.

The optical calibration element may comprise a mirror. Accordingly, height requirements of targets used for trunnion axis tilt calibration of the total station may be reduced. Indeed, the mirror of the optical calibration element may allow a combination of a wide angle between the sighting axis and the horizontal plane while still allowing the center unit to be aimed toward a lower target which may still be positioned at a sufficiently far distance.

The target may be an external target.

In the connected state, the optical calibration element may be arranged such that a normal of the mirror forms an angle relative to the second axis which is narrower than the non-zero calibration angle. Accordingly, height requirements of targets used for trunnion axis tilt calibrations may be reduced. In particular, in case the normal of the mirror forms an angle relative to the second axis which is half of the non-zero calibration angle, a target which has a height approximately the same as the total station may be used for a trunnion axis tilt calibration of the total station.

The optical calibration element may comprise a collimator and the target may be a virtual image projected by the collimator. Accordingly, trunnion axis tilt calibrations may be performed without relying on an external target (i.e., external to the system).

The optical calibration element may further comprise: a reticle mask installable at an image plane of the collimator, whereby the virtual image projected by the collimator may be a virtual image of the reticle mask. Accordingly, trunnion axis tilt calibrations may be performed without relying on an external target (i.e., external to the system).

In the connected state, the optical calibration element may be arranged such that an angle between an optical axis of the collimator and the plane having a normal parallel to the second axis substantially corresponds to the non-zero calibration angle. Accordingly, the center unit may be aimed toward the target (i.e., the virtual image projected by the collimator) without relying on further optical elements (e.g., mirrors). A less complex system may thereby be allowed.

A size of the optical calibration element may be adapted to an effective optical aperture of a front lens of the center unit. Accordingly, an intensity of light entering the front lens of the center unit may be substantially unaffected by the optical calibration element.

The system may further comprise circuitry configured to execute a calibration function. The calibration function may be configured to: aim, via the optical calibration element, the center unit toward a target in a first face of the total station; perform a first angular measurement in the first face of the total station; aim, via the optical calibration element, the center unit toward the target in a second face of the total station,; perform a second angular measurement in the second face of the total station; and evaluate the first angular measurement and the second angular measurement, whereby a deviation of the first axis of the total station relative to a plane having a normal parallel to the second axis of the total station may be determined. Accordingly, a trunnion axis tilt calibration may be performed automatically by the system.

The circuitry may be further configured to execute a prompt function. The prompt function may be configured to prompt a user of the system to connect the optical calibration element to the total station or the support on which the total station may be installed. Accordingly, a system which is easier to use by the user may be allowed. Further, the user may be prompted to connect the optical calibration element to the total station or the support on which the total station may be installed in connection with initiation of a trunnion axis tilt calibration, thereby avoiding to unnecessary connecting the optical calibration element. A more robust system may thereby be allowed.

According to a second aspect a calibration method for a system is provided. The system comprises a total station comprising a center unit mounted on an alidade for rotation about a first axis, wherein the alidade is mounted on a base of the total station for rotation about a second axis orthogonal to the first axis, whereby a sighting axis of the total station is rotatable about a rotation point, and an optical calibration element connectable to the total station or a support on which the total station is installed, and wherein the optical calibration element in a connected state is arranged such that, when the sighting axis is rotated about the rotation point to form a non-zero calibration angle relative to a plane having a normal parallel to the second axis, the center unit is aimed toward a target via the optical calibration element. The method comprises: aiming, via the optical calibration element, the center unit toward a target in a first face of the total station; performing a first angular measurement in the first face of the total station; aiming, via the optical calibration element, the center unit toward the target in a second face of the total station; and comparing the first angular measurement and the second angular measurement, whereby a deviation of the first axis of the total station relative to a plane having a normal parallel to the second axis of the total station is determined.

The calibration method may further comprise prompting a user to connect the optical calibration element to the total station or the support on which the total station may be installed.

The system may further comprise a non-transitory computer-readable storage medium, and the calibration method may further comprise storing the determined deviation on the non-transitory computer-readable storage medium.

The above-mentioned features of the first aspect, when applicable, apply to this second aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

Brief description of the drawings

The aspects of the present inventive concept, including its particular features and advantages, will be readily understood from the following detailed description and the accompanying drawings, in which:

Figure 1 is a schematic illustration of a system comprising a total station and an optical calibration element comprising a mirror.

Figure 2 is a schematic illustration of a total station set up for trunnion axis tilt calibration without using an optical calibration element.

Figure 3 is a schematic illustration of a total station set up for trunnion axis tilt calibration using an optical calibration element.

Figure 4 is a schematic illustration of a system comprising a total station and an optical calibration element comprising a collimator.

Figure 5 is a schematic illustration of circuitry.

Figure 6 is a block scheme of a calibration method for a system.

Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

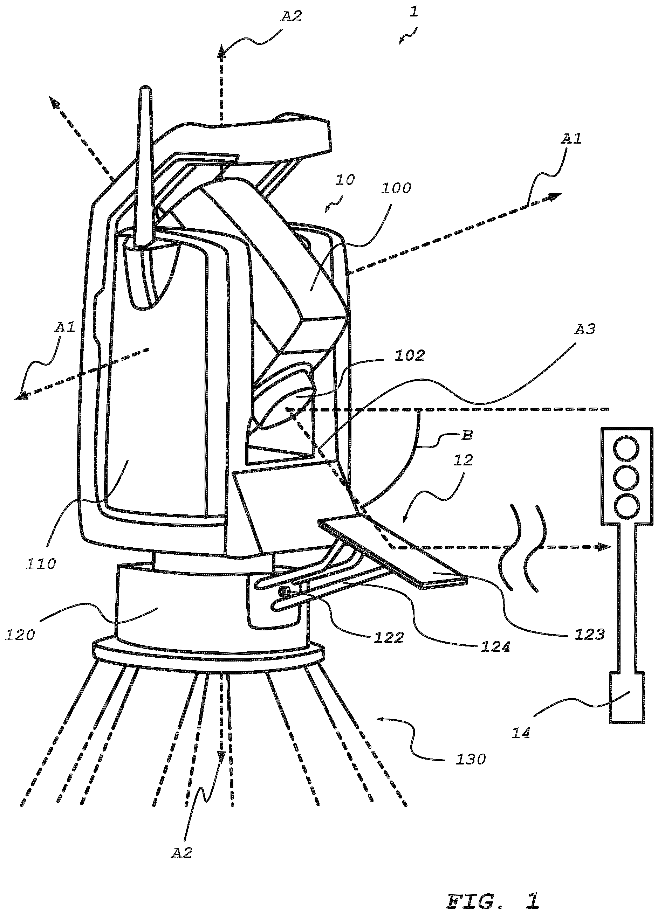

A total station (see Fig. 1) typically comprises a center unit 100 mounted on an alidade 110 for rotation about a first axis A1 (may be referred to as a trunnion axis within the art). The alidade 110 is typically mounted on a base 120 for rotation about a second axis A2 (may be referred to as an azimuth axis or vertical axis within the art). A sighting axis A3, orthogonal to the first axis A1 is then rotatable about a rotation point. Ideally, the first axis A1 and the second axis A2 of the total station 10 should be orthogonal and checking (or calibrating) for alignment errors between the first and second axes A1, A2 is typically referred to as a trunnion axis tilt calibration. When performing a trunnion axis tilt calibration for a total station, it is typically required to perform Face 1 and Face 2 angular measurements towards a target at a sufficiently far distance and at a sufficiently great vertical angle relative to a horizontal plane.

Figure 1 is a schematic illustration of a system 1 comprising a total station 10 and an optical calibration element 12. Even though not illustrated in Fig. 1, the system 1 may further comprise circuitry.

The total station 10 comprises a center unit 100. The center unit 100 may comprise a front lens 102. The center unit 100 may comprise a plurality of measurement channels (not illustrated in Fig. 1). At least one measurement channel may comprise an electronic distance measurement (EDM) unit. At least one measurement channel may comprise an electronic distance measurement (EDM) unit. The EDM unit may be configured to determine a distance to a target aimed at with the center unit 100. At least one measurement channel may comprise an image sensor. The image sensor may be configured to capture images of a target aimed at with the center unit 100. Each measurement channel of the center unit 100 may communicate with an outside of the center unit 100 via the front lens 102. The center unit 100 is mounted on an alidade 110 for rotation about a first axis A1. The first axis A1 may be referred to as a trunnion axis.

The alidade 110 is mounted on a base 120 of the total station 10 for rotation about a second axis A2 orthogonal to the first axis A1, whereby a sighting axis A3 of the total station 10 is rotatable about a rotation point. The second axis A2 may be referred to as an azimuth axis or vertical axis. The second axis A2 may, when the total station 10 is in use (e.g., positioned in an environment to be surveyed), be substantially vertical. Put differently, the second axis A2 may be substantially vertical when the total station 10 is levelled. To that end, the total station 10 may comprise a levelling unit (not illustrated). The levelling unit may be configured to aid a user of the total station 10 to level the total station 10. The first axis A1, the second axis A2, and sighting axis A3 may intersect the rotation point.

As is illustrated in the example of Fig. 1, the optical calibration element 12 is connectable to the total station 10. In the example of Fig. 1, the optical calibration element 12 is connected to a non-rotating portion of the base 120 (and, more generally, to a non-rotating part of the total station 10). Thus, the center unit 100 and the alidade 110 may be allowed to rotate relative to the optical calibration element 12. However, it is to be understood that the optical calibration element 12 may be connectable to a support 130 on which the total station 10 is installed. The support 130 may, e.g., be a tribrach, a tripod, etc. The optical calibration element 12 may, e.g., be connectable to an exterior of the total station 10 or the support 130 on which the total station 10 is installed. When the optical calibration element 12 is connected to the total station 10 or to the support 130 on which the total station 10 is installed, the system 1 may be in a connected state. The optical calibration element 12 may be releasably connectable to the total station 10 or the support 130 on which the total station 10 is installed. In the example of Fig. 1, the optical calibration element 12 is releasably connected to the base 120 by a bolt 122, however, other means for releasably connecting the optical calibration element 12 may be envisioned. For instance, the optical calibration element 12 may be releasably connected to the base 120 by screws, magnets, and/or clip-on arrangements.

As is illustrated in Fig. 1, the optical calibration element 12 in the connected state is arranged such that, when the sighting axis A3 is rotated about the rotation point to form a non-zero calibration angle B relative to a plane having a normal parallel to the second axis A2, the center unit is aimed toward a target 14 via the optical calibration element 12. The plane having a normal parallel to the second axis A2 may, when the total station 10 is in use, be substantially parallel to a horizontal plane. The target 14 may appear to be located at a distance of 30 m or more from the total station 10 (e.g., from the front lens 102 of the center unit 100).

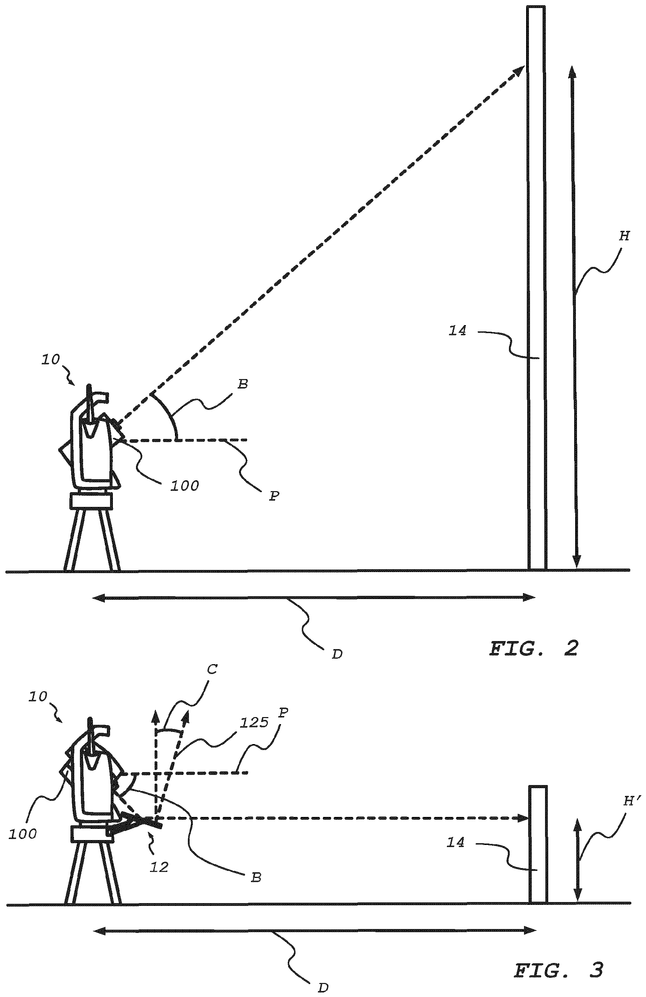

As is in the example of Fig. 1, the optical calibration element 12 may comprise a mirror 123. The optical calibration element 12 may further comprise structural elements (e.g., support arms 124 as in the example of Fig. 1). The structural elements may be connectable (possible releasably connectable) to the total station 10 or the support on which the total station 10 is installed. As is seen in the example of Fig. 1, the mirror 123 of the optical calibration element 12 allows the sighting axis A3 to be rotated about the rotation point to form a wide angle (i.e., the non-zero calibration angle B) relative to the horizontal plane (assuming that the total station 10 is levelled) while still allowing the center unit 100 to be aimed toward a target having a smaller height and positioned at a sufficiently far distance from the total station 10. This is schematically illustrated in Fig. 2 and Fig. 3.

As in the examples of Fig. 2 and Fig. 3, the target 14 may be an external target. The external target may be a target 14 external to the system 10. The external target may be passive (e.g., object in the terrain) or active (e.g., a target configured to emit light). The external target may be located at a distance D of 30 m or more from the total station 10. In Fig. 2, a total station 10 is set up for trunnion axis tilt calibration without an optical calibration element 12. As is seen in Fig. 2, rotating the sighting axis A3 such that it forms a non-zero calibration angle B with respect to a horizontal plane P, a target at a distance D from the total station 10 must have a minimum height H of $H = D \times tan\, B$. Thus, for a distance D of 30 m and a non-zero calibration angle B of 10 degrees, the required height H of the target is approximately 5.3 m. As is understood from the above, for an even larger non-zero calibration angle B and/or distance D, the required height H of the target can become very large. In Fig. 3, an optical calibration element 12 is connected to the total station 10. In the example of Fig. 3, the sighting axis A3 is rotated about the rotation point to form an equally large non-zero calibration angle B. However, since the center unit 100 is aimed toward the target 14 via the mirror 123 of the optical calibration element 12, the required height H of the target 14 may depend on the non-zero calibration angle B and how the optical calibration element 12 is arranged. For instance, in the connected state, the optical calibration element 12 may be arranged such that a normal 125 of the mirror 123 forms an angle C relative to the second axis A2 (or to an axis parallel to the second axis A2) which is narrower than the non-zero calibration angle B. In the example of Fig. 3, the angle C of the normal 125 of the mirror 123 relative to an axis parallel to the second axis A2 (or a vertical axis) is half of the non-zero calibration angle B. For such configuration, the required height H of the target may be approximately the same as a height H' at which the mirror 123 is positioned. Accordingly, height requirements of targets used for trunnion axis tilt calibrations may be reduced. The non-zero calibration angle B may be 10 degrees or wider. For instance, the non-zero calibration angle B may be 13.5 degrees or wider. As a further example, the non-zero calibration angle B may be 45 degrees or wider. The non-zero calibration angle B may be 90 degrees or narrower. As is understood from the examples of Fig. 2 and Fig. 3, the non-zero calibration angle B may be such that the center unit 100 points upwards (i.e., towards the sky as in the example of Fig. 2) or downwards (i.e., towards the ground as in the example of Fig. 3). In particular, the optical calibration element 12 may be arranged such that the center unit 100 may be oriented upwards while still providing the same effect as in the example of Fig. 3.

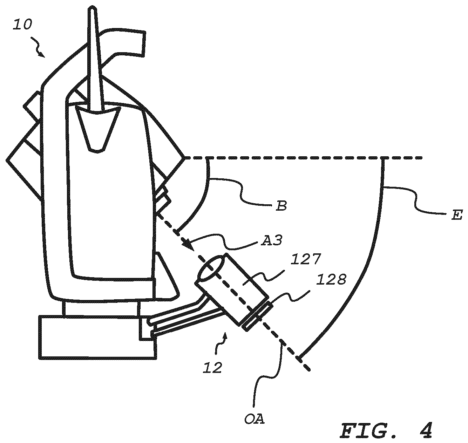

Alternatively, as is illustrated in the example of Fig. 4, the optical calibration element 12 may comprise a collimator 127. In such case, the target may be a virtual image projected by the collimator 127. The optical calibration element 12 may further comprise a reticle mask 128 installable at an image plane of the collimator 127. The virtual image projected by the collimator 127 may be a virtual image of the reticle mask 128. In the connected state, the optical calibration element 12 may be arranged such that an angle between an optical axis OA of the collimator 127 and the plane having a normal parallel to the second axis A2 substantially corresponds to the non-zero calibration angle B. Put differently, in the connected state, the optical calibration element 12 may be arranged such that the optical axis OA of the collimator 127 is aligned with the sighting axis A3 when the sighting axis A3 has been rotated about the rotation point to form the non-zero calibration angle B relative to the plane having a normal parallel to the second axis A2.

It is to be understood that a size of the optical calibration element 12 may be adapted to an effective optical aperture of a front lens 102 of the center unit 100. For instance, a size of the mirror 123 or a size of an aperture of the collimator 127 may be adapted to the effective optical aperture of the front lens 102 of the center unit 100.

As is understood from the above description, the sighting axis A3 of the center unit 100 of the total station 10 can form a sufficiently wide angle (i.e., the non-zero calibration angle B) relative to the horizontal plane (assuming that the total station 10 is levelled) without requiring the center unit 100 to be aimed toward a target 14 at a great height H which is the case in the example of Fig. 2. Instead, the center unit 100 can be aimed toward a target 14 via the optical calibration element 12. As in the example of Fig. 1 and Fig. 3, the optical calibration element 12 may comprise the mirror 123 which can be arranged such that the sighting axis A3 forms a sufficiently great angle (e.g., 10 degrees or wider) to the plane having a normal parallel to the second axis A2 (i.e., the horizontal plane when the total station 10 is levelled) while the center unit 100 can be aimed toward an external target 14 at a sufficiently large distance D (e.g., 30 m or larger) which has a lower height H' (e.g., lower than 5 m). As in the example of Fig. 4, the optical calibration element 12 comprises a collimator 127 providing a virtual target. Hence, the collimator 127 can be arranged such that the center unit 100 is aimed toward the virtual target when the sighting axis A3 is rotated to form a sufficiently great angle (e.g., 10 degrees or larger) to the plane having a normal parallel to the second axis A2. In the examples illustrated in Fig. 1, Fig. 3, and Fig. 4, the optical calibration element 12 allows on-site trunnion axis tilt calibration of the total station 10 without requiring a target 14 at a great height (e.g., 5 m or higher) which is the case for the example of Fig. 2.

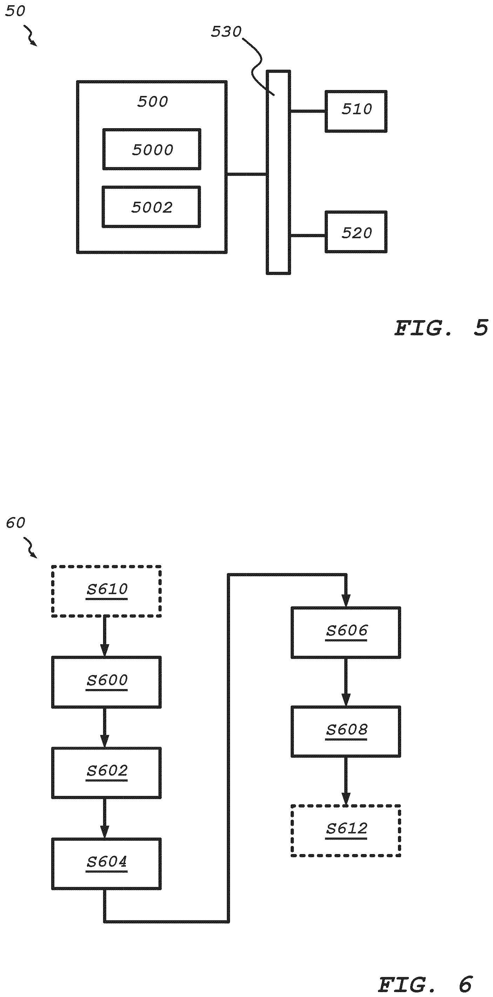

The total station may further comprise circuitry 50. Even though the circuitry 50 is not explicitly illustrated in Fig. 1, it is to be understood that the circuitry 50 may be comprised in one or more of the center unit 100, the alidade 110, and the base 120. It is further to be understood that the circuitry 50 may be comprised by an external unit (not illustrated in Fig. 1), e.g., a handheld unit configured to control the total station 10. The handheld unit may further be configured to display measurement results determined by the total station 10. The circuitry 50 is illustrated in Fig. 5. As is illustrated in the example of Fig. 5, the circuitry 50 may comprise one or more of a memory 500, a processing unit 510, a transceiver 520, and a data bus 530. The memory 500, the processing unit 510, and the transceiver 520 may communicate via the data bus 530. The processing unit 510 may comprise a central processing unit (CPU) and/or a graphical processing unit (GPU). The transceiver 520 may be configured to communicate with external devices. For example, the transceiver 520 may be configured to communicate with servers, computer external peripherals (e.g., external storage), etc. The external devices may be local devices or remote devices (e.g., a cloud server). As a further example, in case at least part of the circuitry 50 is comprised in the external unit (e.g., the handheld unit), the circuitry 50 may communicate with, and control, the total station 10 via the transceiver 520. In such case, both the external unit and the total station 10 may comprise transceivers. The transceiver 520 may be configured to communicate with the external devices via an external network (e.g., a localarea network, the internet, etc.). The transceiver 520 may be configured for wireless and/or wired communication. Suitable technologies for wireless communication are known to the skilled person. Some non-limiting examples comprise Wi-Fi, Bluetooth, and Near-Field Communication (NFC). Suitable technologies for wired communication are known to the skilled person. Some non-limiting examples comprise USB, Ethernet, and Firewire. The memory 500 may be a non-transitory computer-readable storage medium. The memory 500 may be a random-access memory. The memory 500 may be a nonvolatile memory. As is illustrated in the example of Fig. 5, the memory 500 may store program code portions 5000, 5002 corresponding to one or more functions. The program code portions 5000, 5002 may be executable by the processing unit 510, which thereby performs the functions. Hence, when it is referred to that the circuitry 50 is configured to execute a specific function, the processing unit 510 may execute program code portions 5000, 5002 corresponding to that specific function which may be stored on the memory 500. However, it is to be understood that one or more functions of the circuitry 50 may be hardware implemented and/or implemented in a specific integrated circuit. For example, one or more functions may be implemented using field-programmable gate arrays (FPGAs). Put differently, one or more functions of the circuitry 50 may be implemented in hardware or software, or as a combination of the two.

The circuitry 50 may be configured to control functionality of the total station 10. For instance, the circuitry 50 may be configured to execute one or more of a calibration function 5000, and a prompt function 5002. The calibration function 5000 may be configured to: aim, via the optical calibration element 12, the center unit 100 toward a target 14 in a first face of the total station 10. The center unit 100 may, in the first face of the total station 10, be aimed at the target 14. The calibration function 5000 may be further configured to perform a first angular measurement in the first face of the total station 10. The total station 10 may further comprise one or more angular sensors (not illustrated). The one or more angular sensors may be configured to determine an orientation of the center unit 100. For instance, the one or more angular sensors may be configured to determine one or more angles between the sighting axis A3 and the first axis A1 and/or the second axis A2. The first angular measurement may comprise angles of the sighting axis A3 relative to the first axis A1 and the second axis A2. The calibration function 5000 may be further configured to aim, via the optical calibration element 12, the center unit 1000 toward the target 14 in a second face of the total station 10. The center unit 100 may, in the second face of the total station 10, be aimed at the target 14. The calibration function 5000 may be further configured to perform a second angular measurement in the second face of the total station 10. The second angular measurement may comprise angles of the sighting axis A3 relative to the first axis A1 and the second axis A2. The calibration function 5000 may be further configured to evaluate the first angular measurement and the second angular measurement, whereby a deviation of the first axis A1 of the total station 10 relative to a plane having a normal parallel to the second axis A2 (e.g., a horizontal plane in case the total station 10 is levelled) of the total station 10 may be determined. Accordingly, a trunnion axis tilt calibration may be performed automatically by the system. The calibration function 5000 may be further configured to store the determined deviation on the memory 500 of the circuitry 50. The prompt function may be configured to prompt a user of the system 1 to connect the optical calibration element 12 to the total station 10 or the support 130 on which the total station 10 may be installed. The user may be a user of the total station which is to be calibrated.

Figure 6 is a block scheme of a calibration method 60 for a system 1. The system 1 comprises a total station 10 comprising a center unit 100 mounted on an alidade 110 for rotation about a first axis A1, wherein the alidade 110 is mounted on a base 120 of the total station 10 for rotation about a second axis A2 orthogonal to the first axis A1, whereby a sighting axis A3 of the total station 10 is rotatable about a rotation point, and an optical calibration element 12 connectable to the total station 10 or a support 130 on which the total station 10 is installed, and wherein the optical calibration element 12 in a connected state is arranged such that, when the sighting axis A3 is rotated about the rotation point to form a non-zero calibration angle B relative to a plane having a normal parallel to the second axis A2, the center unit 100 is aimed toward a target 14 via the optical calibration element 12. The calibration method 60 may be performed in the connected state. The calibration method 60 comprises: aiming S600, via the optical calibration element 12, the center unit 100 toward a target 14 in a first face of the total station 10; performing S602 a first angular measurement in the first face of the total station 10; aiming S604, via the optical calibration element 12, the center unit 100 toward the target 14 in a second face of the total station 10; performing S606 a second angular measurement in the second face of the total station 10; and comparing S608 the first angular measurement and the second angular measurement, whereby a deviation of the first axis A1 of the total station 10 relative to a plane having a normal parallel to the second axis A2 of the total station 10 is determined. The calibration method 60 may further comprise prompting S610 a user to connect the optical calibration element 12 to the total station 10 or the support 130 on which the total station 10 may be installed. The system 10 may further comprise a non-transitory computer-readable storage medium, and the calibration method 60 may further comprise storing S612 the determined deviation on the non-transitory computer-readable storage medium.

The person skilled in the art realizes that the present inventive concept by no means is limited to the preferred variants described above. On the contrary, many modifications and variations are possible within the scope of the appended claims. For instance, the present inventive concept has been described in relation to a total station, however, it is to be understood that it may be applicable to other devices (e.g., theodolites) as well. Additionally, variations to the disclosed variants can be understood and effected by the skilled person in practicing the claimed invention, from a study of the drawings, the disclosure, and the appended claims.

**Claims**

1. A system (1) comprising:

    a total station (10) comprising a center unit (100) mounted on an alidade (110) for rotation about a first axis (A1), wherein the alidade (110) is mounted on a base (120) of the total station (10) for rotation about a second axis (A2) orthogonal to the first axis (A1), whereby a sighting axis (A3) of the total station (10) is rotatable about a rotation point; and
    an optical calibration element (12) connectable to the total station (10) or a support (130) on which the total station (10) is installed; and
    wherein the optical calibration element (12) in a connected state is arranged such that, when the sighting axis (A3) is rotated about the rotation point to form a non-zero calibration angle (B) relative to a plane having a normal parallel to the second axis (A2), the center unit (100) is aimed toward a target (14) via the optical calibration element (12).

2. The system (1) according to claim 1, wherein the optical calibration element (12) is releasably connectable to the total station (10) or the support (130) on which the total station (10) is installed.

3. The system (1) according to claim 1 or 2, wherein the non-zero calibration angle (B) is 10 degrees or wider.

4. The system (1) according to any one of claims 1-3, wherein the optical calibration element (12) comprises a mirror (123).

5. The system (1) according to claim 4, wherein the target (14) is an external target.

6. The system (1) according to claim 4 or 5, wherein, in the connected state, the optical calibration element (12) is arranged such that a normal (125) of the mirror (123) forms an angle (C) relative to the second axis (A2) which is narrower than the non-zero calibration angle (B).

7. The system (1) according to any one of claims 1-3, wherein the optical calibration element (12) comprises a collimator (127) and the target (14) is a virtual image projected by the collimator (127).

8. The system (1) according to claim 7, wherein the optical calibration element (12) further comprises:
a reticle mask (128) installable at an image plane of the collimator (127), whereby the virtual image projected by the collimator (127) is a virtual image of the reticle mask (128).

9. The system (1) according to claim 7 or 8, wherein, in the connected state, the optical calibration element (12) is arranged such that an angle (E) between an optical axis (OA) of the collimator (127) and the plane having a normal parallel to the second axis (A2) substantially corresponds to the non-zero calibration angle (B).

10. The system (1) according to any one of claims 1-9, wherein a size of the optical calibration element (12) is adapted to an effective optical aperture of a front lens (102) of the center unit (100).

11. The system (1) according to any one of claims 1-10, further comprising circuitry (50) configured to execute a calibration function (5000) configured to:

    aim, via the optical calibration element (12), the center unit (100) toward a target (14) in a first face of the total station (10);
    perform a first angular measurement in the first face of the total station (10);
    aim, via the optical calibration element (12), the center unit (100) toward the target (14) in a second face of the total station (10);
    perform a second angular measurement in the second face of the total station (10); and
    evaluate the first angular measurement and the second angular measurement, whereby a deviation of the first axis (A1) of the total station (10) relative to a plane having a normal parallel to the second axis (A2) of the total station (10) is determined.

12. The system (1) according to claim 11, wherein the circuitry (50) is further configured to execute:
a prompt function (5002) configured to prompt a user of the system (1) to connect the optical calibration element (12) to the total station (10) or the support (130) on which the total station (10) is installed.

13. A calibration method (60) for a system (1), the system (1) comprising a total station (10) comprising a center unit (100) mounted on an alidade (110) for rotation about a first axis (A1), wherein the alidade (110) is mounted on a base (120) of the total station (10) for rotation about a second axis (A2) orthogonal to the first axis (A1), whereby a sighting axis (A3) of the total station (10) is rotatable about a rotation point, and an optical calibration element (12) connectable to the total station (10) or a support (130) on which the total station (10) is installed, and wherein the optical calibration element (12) in a connected state is arranged such that, when the sighting axis (A3) is rotated about the rotation point to form a non-zero calibration angle (B) relative to a plane having a normal parallel to the second axis (A2), the center unit (100) is aimed toward a target (14) via the optical calibration element (12), the method (60) comprising:

    aiming (S600), via the optical calibration element (12), the center unit (100) toward a target (14) in a first face of the total station (10);
    performing (S602) a first angular measurement in the first face of the total station (10);
    aiming (S604), via the optical calibration element (12), the center unit (100) toward the target (14) in a second face of the total station (10);
    performing (S606) a second angular measurement in the second face of the total station (10); and
    comparing (S608) the first angular measurement and the second angular measurement, whereby a deviation of the first axis (A1) of the total station (10) relative to a plane having a normal parallel to the second axis (A2) of the total station (10) is determined.

14. The calibration method (60) according to claim 13, further comprising:
prompting (S610) a user to connect the optical calibration element (12) to the total station (10) or the support (130) on which the total station (10) is installed.

15. The calibration method (60) according to claim 13 or 14, wherein the system (10) further comprises a non-transitory computer-readable storage medium, the method further (60) comprising:
storing (S612) the determined deviation on the non-transitory computer-readable storage medium.

FIG. 1

*FIG. 2*

*FIG. 3*

*10*

*B*

*E*

*A3*

*127*

*128*

*12*

*OA*

*FIG. 4*

50

530

500

5000

5002

510

520

**FIG. 5**

60

S610

S600

S602

S604

S606

S608

S612

**FIG. 6**

Europäisches
Patentamt

European
Patent Office

Office européen
des brevets

**EUROPEAN SEARCH REPORT**

Application Number

EP 24 22 2084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/263986 A1 (VOGEL MICHAEL [DE]) 20 August 2020 (2020-08-20) * abstract; figures 1A-D, 10, 11 * * paragraph [0074] - paragraph [0091] * * paragraph [0103] - paragraph [0114] * ----- | 1-15 | INV. G01C15/00 G01C1/02 G01C25/00 |
| X | US 2015/160039 A1 (GRÄSSER CHRISTIAN [SE]) 11 June 2015 (2015-06-11) * abstract; figures 1, 2, 6 * * paragraph [0121] - paragraph [0159] * ----- | 1-15 | |
| | | | TECHNICAL FIELDS SEARCHED (IPC) |
| | | | G01C F41G |

The present search report has been drawn up for all claims

| Place of search | Date of completion of the search | Examiner |
|---|---|---|
| The Hague | 30 March 2025 | Hanigk, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**EP 4 764 403 A1**

## ANNEX TO THE EUROPEAN SEARCH REPORT
## ON EUROPEAN PATENT APPLICATION NO.

EP 24 22 2084

30-03-2025

| Patent document cited in search report | Publication date | Patent family member(s) | | Publication date |
|---|---|---|---|---|
| US 2020263986 A1 | 20-08-2020 | CN | 111580072 A | 25-08-2020 |
| | | EP | 3696498 A1 | 19-08-2020 |
| | | US | 2020263984 A1 | 20-08-2020 |
| | | US | 2020263986 A1 | 20-08-2020 |
| US 2015160039 A1 | 11-06-2015 | CN | 101960256 A | 26-01-2011 |
| | | EP | 2247923 A1 | 10-11-2010 |
| | | US | 2011023578 A1 | 03-02-2011 |
| | | US | 2015153200 A1 | 04-06-2015 |
| | | US | 2015160039 A1 | 11-06-2015 |
| | | WO | 2009106144 A1 | 03-09-2009 |

EPO FORM P0459